# EUROPEAN PATENT APPLICATION

(11) **EP 2 475 213 A2**
(43) Date of publication of application: **11.07.2012**
(21) Application number: 12000141.7
(22) Date of filing: 11.01.2012
(51) Int. Cl.: H04W 76/02, H04W 60/00

(54) **Apparatuses and methods for handling mobility magement (MM) back-offs**

(30) Priority: 11.01.2011 US 201113431546
(71) Applicant: HTC Corporation, Taoyuan County 330 (TW)
(72) Inventor: Liao, Ching-Yu, Taoyuan City Taoyuan County 330 (TW)
(74) Representative: Emde, Eric

(57) **Abstract**

A mobile communication device with a wireless module and a controller module is provided. The wireless module performs wireless transceiving to and from a service network. The controller module transmits a request message for a Mobility Management (MM) procedure to the service network via the wireless module, and receives a rejection message with an MM back-off timer corresponding to the request message from the service network via the wireless module. Also, the controller module resets an attempt counter for the MM procedure in response to the rejection message with the MM back-off timer.

## Description

### CROSS REFERENCE TO RELATED APPLICATIONS

This Application claims priority of U.S. Provisional Application No. 61/431,546, filed on January 11, 2011, and the entirety of which is incorporated by reference herein.

### BACKGROUND OF THE INVENTION

### Field of the Invention

The invention generally relates to handling Mobility Management (MM) back-offs, and more particularly, to apparatuses and methods for handling MM back-offs by properly controlling related timers and counters.

### Description of the Related Art

In a typical mobile communications environment, a user equipment (UE), including a mobile telephone (also known as cellular or cell phone), a laptop computer with wireless communications capability, or a personal digital assistant (PDA) etc., may communicate voice and/or data signals with one or more service network. The wireless communications between the UE and the service networks may be in compliance with various radio access technologies, such as the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA 2000) technology, Time Division-Synchronous Code Division Multiple Access (TD-SCDMA) technology, Worldwide Interoperability for Microwave Access (WiMAX) technology, Long Term Evolution (LTE) technology, and others.

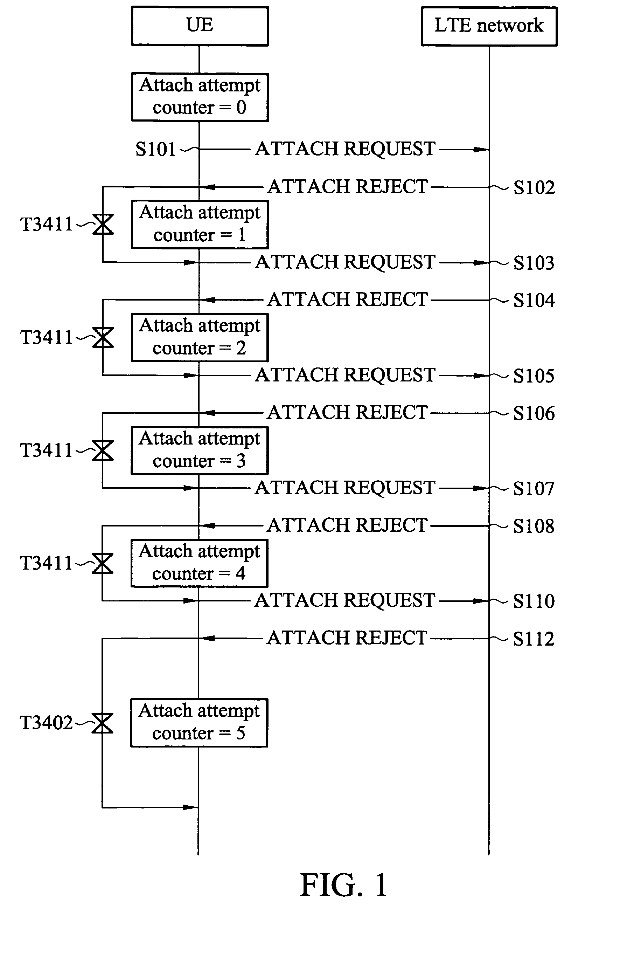

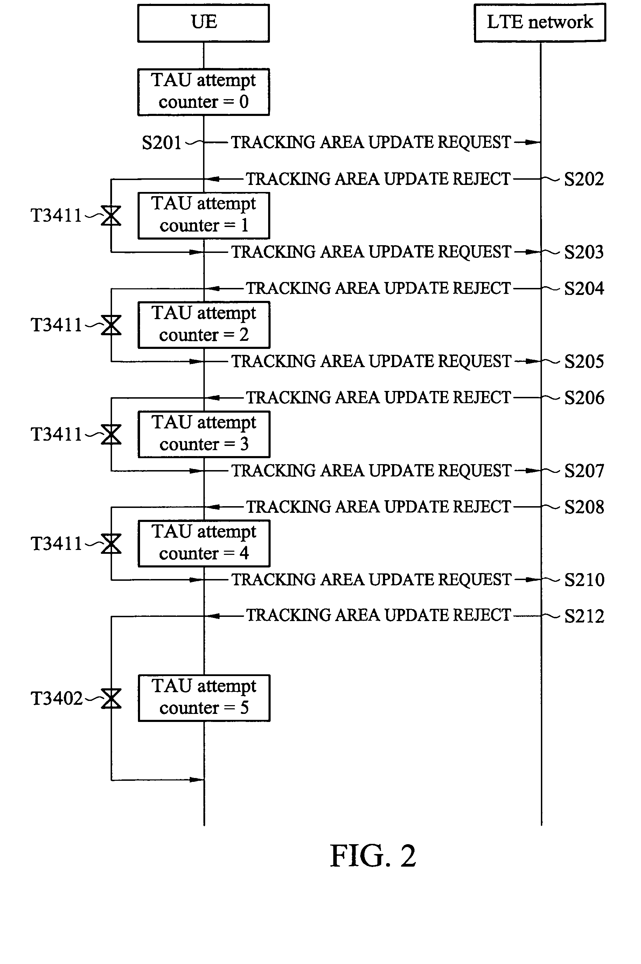

Take the LTE technology in compliance with the 3GPP TS 23.401 specification, v.10.2.0 (referred to herein as the TS 23.401 specification) and the 3GPP TS 24.301 specification, v.10.1.0 (referred to herein as the TS 24.301 specification) for example. An Attach procedure, as shown in fig. 1, starts by the UE transmitting an ATTACH REQUEST message to the LTE network (step S101). When receiving the ATTACH REQUEST message, the LTE network authenticates the UE to see if the UE is authorized to have access to packet data services. If the authentication fails, the LTE network rejects the attachment request by replying to the UE with an ATTACH REJECT message (step S102). In response to the ATTACH REJECT message, the UE starts the timer T3411 and then retransmits the ATTACH REQUEST message to the LTE network when the timer T3411 expires (step S103). The UE further maintains an Attach attempt counter for accumulating the number of subsequently rejected attach attempts. The Attach attempt counter is used to limit the number of subsequently rejected attach attempts. If the retransmitted ATTACH REQUEST message is rejected again (step S104), the retry process may be repeated until the Attach attempt counter reaches 5 (steps S105 to S 110). After the 5th failed attach attempt, the UE starts the timer T3402 to delay further retry attempts, i.e., the UE may only initiate the Attach procedure when the timer T3402 expires. With the timers T3411 and T3402, frequent processing of the retry attempts of the Attach procedure may be avoided for the LTE network, so that the system resources of the LTE network may be available for other tasks. Similarly, the timers T3411 and T3402 may also be applied to the Tracking Area Update (TAU) procedure, as shown in Fig. 2, to control the retry attempts of the TAU procedure. Depending on the value of the Attach attempt counter, specific actions are performed.

During the Attach procedure or the TAU procedure, there may be a situation where the attachment request or TAU request is rejected due to the Non-Access Stratum (NAS) level congestion control of the LTE network. In this case, the ATTACH REJECT message or the TRACKING AREA UPDATE REJECT message comprises an MM back-off timer to limit the attachment retry of the UE. Specifically, the UE can not initiate any MM procedure, including the Attach procedure, the TAU procedure, and the Service Request procedure, until the MM back-off timer expires. However, the behavior of the UE for handling the timers T3411 and T3402 and the Attach and TAU attempt counters in response to receiving the rejection message with an MM back-off timer is indeterminate, and problems may occur for the UE and/or the LTE network.

### BRIEF SUMMARY OF THE INVENTION

In one aspect of the invention, a mobile communication device comprising a wireless module and a controller module is provided. The wireless module performs wireless transceiving to and from a service network. The controller module transmits a request message for an MM procedure to the service network via the wireless module, and receives a rejection message with an MM back-off timer corresponding to the request message from the service network via the wireless module. Also, the controller module resets an attempt counter for the MM procedure in response to the rejection message with the MM back-off timer.

In another aspect of the invention, a method for handling an MM back-off operation by a mobile communication device is provided. The method comprises the steps of transmitting a request message for an MM procedure to a service network, receiving a rejection message with an MM back-off timer corresponding to the request message from the service network, and resetting an attempt counter for the MM procedure in response to the rejection message with the MM back-off timer.

In yet another aspect of the invention, a mobile communication device comprising a wireless module and a controller module is provided. The wireless module performs wireless transceiving to and from a service network. The controller module transmits a request message for an MM procedure to the service network via the wireless module, and receives a rejection message with an MM back-off timer corresponding to the request message from the service network via the wireless module. Also, the controller module initiates a Public Land Mobile Network (PLMN) selection procedure to search for another service network via the wireless module in response to the rejection message with the MM back-off timer.

In still another aspect of the invention, a method for handling an MM back-off operation by a mobile communication device is provided. The method comprises the steps of transmitting a request message for an MM procedure to a service network, receiving a rejection message with an MM back-off timer corresponding to the request message from the service network, and initiating a PLMN selection procedure to search for another service network in response to the rejection message with the MM back-off timer.

Other aspects and features of the present invention will become apparent to those with ordinarily skill in the art upon review of the following descriptions of specific embodiments of apparatuses and methods for handling MM back-offs.

### BRIEF DESCRIPTION OF DRAWINGS

The invention can be more fully understood by reading the subsequent detailed description and examples with references made to the accompanying drawings, wherein:

Fig. 1 is a block diagram illustrating the retry mechanism of an Attach procedure with an attempt counter and retry back-off timers;

Fig. 2 is a block diagram illustrating the retry mechanism of a TAU procedure with an attempt counter and retry back-off timers;

Fig. 3 is a block diagram illustrating a mobile communication environment according to an embodiment of the invention;

Fig. 4 is a message sequence chart illustrating an MM back-off operation during an Attach procedure according to an embodiment of the invention;

Fig. 5 is a message sequence chart illustrating an MM back-off operation during a TAU procedure according to an embodiment of the invention;

Fig. 6 is a message sequence chart illustrating an MM back-off operation during an Attach procedure according to another embodiment of the invention;

Fig. 7 is a message sequence chart illustrating an MM back-off operation during a TAU procedure according to another embodiment of the invention;

Fig. 8 is a flow chart illustrating a method for handling an MM back-off operation by a mobile communication device according to an embodiment of the invention; and

Fig. 9 is a flow chart illustrating a method for handling an MM back-off operation by a mobile communication device according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The 3GPP specifications are used to teach the spirit of the invention, and the invention is not limited thereto.

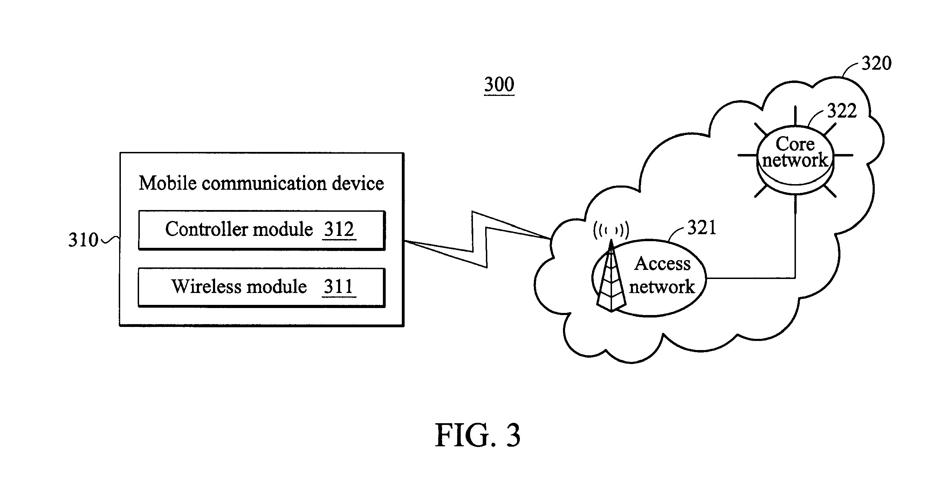

Fig. 3 is a block diagram illustrating a mobile communication environment according to an embodiment of the invention. In the mobile communication environment 300, the mobile communication device 310 is wirelessly connected to the service network 320 for obtaining wireless services. The service network 320 comprises an access network (or called radio access network) 321 and a core network 322. The service network 320 may be a network in compliance with the Global System for Mobile Communication (GSM), Universal Mobile Telecommunications System (UMTS), or Evolved Packet System (EPS) technology. The access network 321 may be a GSM Edge Radio Access Network (GERAN) in the GSM technology, a UMTS Terrestrial Radio Access Network (UTRAN) in the WCDMA/HSPA technology, or an Evolved-UTRAN (E-UTRAN) in the LTE/LTE-Advanced technology, and the core network 322 may be a GSM core or General Packet Radio Service (GPRS) core in the GSM/UMTS system or an Evolved Packet Core (EPC) in the EPS system. The mobile communication device 310 comprises a wireless module 311 for performing the functionality of wireless transmissions and receptions to and from the service network 320, and a controller module 312 for controlling the operation of the wireless module 311 and other functional components, such as a display unit and/or keypad serving as the MMI (man-machine interface), a storage unit storing the program codes of applications or communication protocols, or others. Although not shown, a subscriber identity card may be provided to be coupled to the controller module 312, which stores the International Mobile Subscriber Identity (IMSI), the security keys used for identification and authentication with the service networks, and other operation related data acquired during communications with the service networks, such as the Equivalent PLMN list and Forbidden PLMN list, etc. The subscriber identity card may be a Subscriber Identity Module (SIM) card or a Universal SIM (USIM) card.

In the following embodiments, the service network 320 may be a GSM/UMTS/EPS network belonging to a specific PLMN, and the mobile communication device 310 may be a Mobile Station (MS) or User Equipment (UE). The UMTS/EPS network is in compliance with the 3GPP TS 23.060/TS 23.401 specifications, 3GPP TS 24.008/TS 24.301 specifications, 3GPP TS 23.122 and/or other related UMTS/EPS specifications. Based on the technology used, the messages of Mobility Management (MM) operations may correspond to the GSM/UMTS/EPS technology, respectively, e.g. MM message for Location Area Update, GMM message for Routing Area Update, and EPS Mobility Management (EMM) message for Tracking Area Update. Further, the TAU/RAU procedure may be a combined TA/LA or combined RA/LA procedure in which the TAU/RAU REQUEST message indicates that the mobile communication device 310 wishes to perform TA/RA and LA update for a Packet-Switched domain and a Circuit-Switched (CS) domain, respectively. The Attach procedure may be an ATTACH REQUEST message for a Circuit-Switched domain service in GSM/UMTS system or for Packet-Switched domain service in UMTS/EPS system; further, the Attach procedure may be a combined Attach procedure in which the ATTACH REQUEST message indicates that the mobile communication device 310 wishes to start a packet data session and a Circuit-Switched (CS) domain service with the service network 320 for mobile communication services.

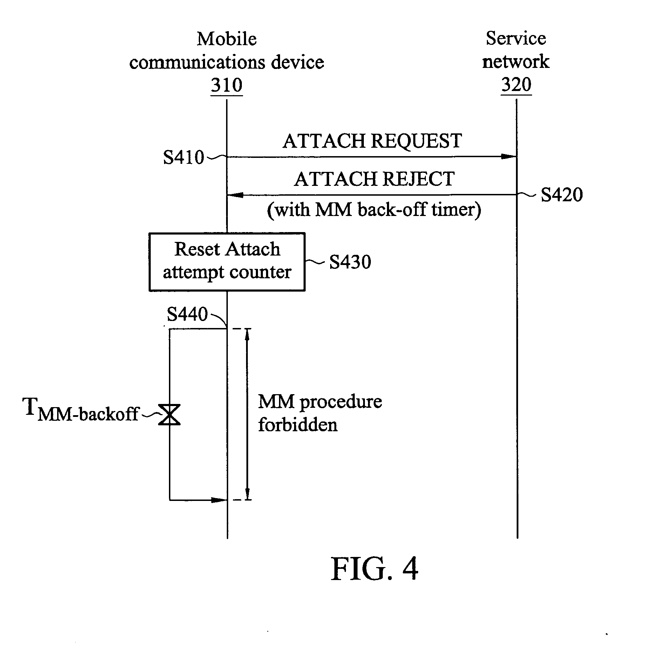

In below embodiments, the controller module 312 controls the wireless module 311 for performing Attach procedures and TAU procedures with the service network 320. Fig. 4 is a message sequence chart illustrating an MM back-off operation during an Attach procedure according to an embodiment of the invention. In this embodiment, the service network 320 may be an EPS system comprising an LTE/LTE-Advanced access network, EPC core network and the mobile communication device 310 may be a UE in compliance with the TS 23.401 and TS 24.301 specifications and/or other related specifications of the LTE/LTE-Advanced technology. To start the Attach procedure, the controller module 312 transmits an ATTACH REQUEST message to the service network 320 via the wireless module 311 (step S410). The ATTACH REQUEST message may comprise the registration information concerning the mobile communication device 310. Specifically, the ATTACH REQUEST message indicates that the mobile communication device 310 wishes to start a packet data session with the service network 320 for mobile communication services. When receiving the ATTACH REQUEST message, the core network 322 decides to reject the attach request due to the fact that the NAS level congestion control is applied on the core network 322 which is congested, and then replies to the mobile communication device 310 with an ATTACH REJECT message comprising an EMM cause value and an MM back-off timer (step S420). The controller module 312 further maintains an Attach attempt counter for accumulating the number of subsequently rejected attach attempts, and the Attach attempt counter is incremented by 1 for each failed attach attempt. In response to receiving the ATTACH REJECT message via the wireless module 311, the controller module 312 resets the Attach attempt counter (step S430). In one embodiment, the value of the Attach attempt counter may be equal to 1 before being reset, if the ATTACH REJECT message corresponds to a first ATTACH REQUEST message in an Attach procedure. In another embodiment, the value of the Attach attempt counter may be greater than 1 before being reset, if the ATTACH REJECT message corresponds to a re-transmitted ATTACH REQUEST message in an Attach procedure. Subsequent to the step S430, the controller module 312 starts the MM back-off timer (step S440), and does not initiate any MM procedure until the MM back-off timer expires. Note that, the controller module 312 does not start the timer T3411 or T3402 in response to the ATTACH REJECT message with the MM back-off timer, so that the handling of the timers T3411 and T3402 does not interfere with the handling of the MM back-off timer and the problem of indeterminate behavior of the mobile communication device 310 for handling the MM back-off operation is resolved.

Note that, in another embodiment, the service network 320 may comprise a legacy system, such as a GERAN/UTRAN access network and a GSM/GPRS core network. The Attach procedure in Fig. 4 may be an Attach procedure for Circuit-Switched service in GSM/UMTS system, an Attach procedure for Packet-Switch service in GSM/UMTS/EPS system, or a combined Attach procedure in which the ATTACH REQUEST message indicates that the mobile communication device 310 wishes to start a packet data session and a Circuit-Switched (CS) domain service with the service network 320 for mobile communication services.

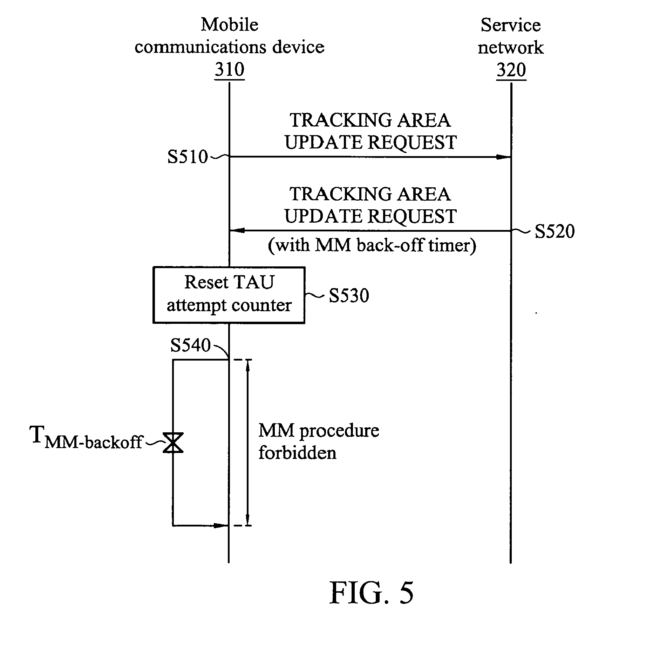

Fig. 5 is a message sequence chart illustrating an MM back-off operation during a TAU procedure according to an embodiment of the invention. A Tracking Area (TA) is formed by the coverage of a group of cells (or NodeB, eNBs). When the mobile communication device 310 moves from one TA to another, it needs to inform the service network 320 about its new TA by a TAU procedure. Alternatively, even if the mobile communication device 310 is stationary, it still needs to periodically report its TA by a TAU procedure when it is in idle mode. To start the TAU procedure, the controller module 312 transmits a TRACKING AREA UPDATE REQUEST message to the service network 320 via the wireless module 311 (step S510). The TRACKING AREA UPDATE REQUEST message may comprise the information concerning the TA which the mobile communication device 310 is currently in. When receiving the TRACKING AREA UPDATE REQUEST message, the core network 322 decides to reject the TAU request due to the fact that the NAS level congestion control is applied on the core network 322 when it is congested, and then replies to the mobile communication device 310 with a TRACKING AREA UPDATE REJECT message comprising an EMM cause value and an MM back-off timer (step S520). The controller module 312 further maintains a TAU attempt counter for accumulating the number of subsequently rejected TAU attempts, and the TAU attempt counter is incremented by 1 for each failed TAU attempt. In response to receiving the TRACKING AREA UPDATE REJECT message via the wireless module 311, the controller module 312 resets the TAU attempt counter (step S530). In one embodiment, the value of the TAU attempt counter may be equal to 1 before being reset, if the TRACKING AREA UPDATE REJECT message corresponds to a first TRACKING AREA UPDATE REQUEST message in a TAU procedure. In another embodiment, the value of the TAU attempt counter may be greater than 1 before being reset, if the TRACKING AREA UPDATE REJECT message corresponds to a re-transmitted TRACKING AREA UPDATE REQUEST message in a TAU procedure. Subsequent to the step S530, the controller module 312 starts the MM back-off timer (step S540), and does not initiate any MM procedure until the MM back-off timer expires.

Note that, in another embodiment, the service network 320 in Fig. 5 may be a legacy network, such as a GERAN/UTRAN access network or a GSM/GPRS core network in the GSM/UMTS system. The LAU procedure is used for registration in Circuit-Switched domain and the LOCATION AREA UPDATE REQUEST message may be used. The RAU procedure is used for registration in Packet-Switched domain and the ROUTING AREA UPDATE REQUEST message may be used. A combined RA/LA Update procedure may be used in which the ROUTING AREA UPDATE REQUEST message may be used to inform the legacy about its location in Packet-Switched domain and Circuit-Switched domain, with the assistance of the infrastructure of the service network.

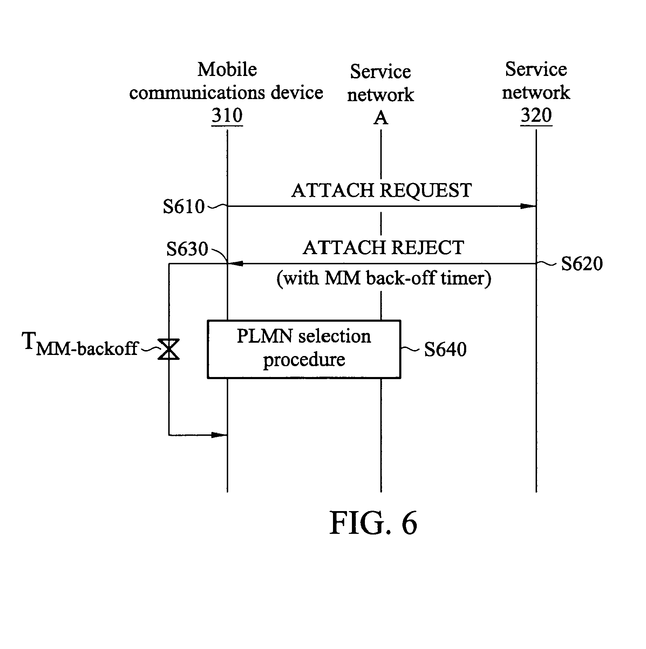

Fig. 6 is a message sequence chart illustrating an MM back-off operation during an Attach procedure according to another embodiment of the invention. To start the Attach procedure, the controller module 312 transmits an ATTACH REQUEST message to the service network 320 via the wireless module 311 (step S610). The ATTACH REQUEST message may comprise the registration information concerning the mobile communication device 310. Specifically, the ATTACH REQUEST message indicates that the mobile communication device 310 wishes to register with the service network 320 for mobile communication services. When receiving the ATTACH REQUEST message, the core network 322 decides to reject the attachment request due to the fact that the NAS level congestion control is applied on core network 322 when it is congested, and then replies to the mobile communication device 310 with an ATTACH REJECT message comprising an EMM cause value and an MM back-off timer (step S620). The controller module 312 further maintains an Attach attempt counter for accumulating the number of subsequently rejected attach attempts, and the Attach attempt counter is incremented by 1 for each failed attach attempt. In response to receiving the ATTACH REJECT message via the wireless module 311, the controller module 312 starts the MM back-off timer (step S630), and does not initiate any MM procedure until the MM back-off timer expires. Subsequently, the controller module 312 performs a Public Land Mobile Network (PLMN) selection procedure to search for another service network (denoted as Service Network A in Fig. 6) via the wireless module 311 (step S640), since the service network 320 is congested and the wireless services may not be obtained therefrom for a certain period of time. In one embodiment, before performing the step S640, the controller module 312 may wait for a random period of time, to avoid the problem of a massive number of UEs, which were rejected with MM back-off timers, flocking into a same service network.

In one embodiment, the PLMN selection procedure in step S640 may involve scanning for any available cells nearby, collecting the system information broadcasts from the available cells, and determining a suitable cell among the available cells, which belongs to a service network other than the service network 320. If a suitable cell of another service network is found and the searched service network does not have an MM back-off timer running in the controller module 312, the mobile communication device 310 may try to perform the Attach procedure with that service network. In another embodiment, if all available service networks have related MM back-off timers running in the controller module 312, the mobile communication device 310 may determine a service network to perform the Attach procedure where the service network has a related MM back-off timer running with the least amount of remaining time for expiry. Thus, the mobile communication device 310 may register to another service network to obtain wireless services as soon as possible.

Please note that in the embodiments of Fig.4 and Fig.6, the controller module 312 does not start the timer T3411 or T3402 in response to the ATTACH REJECT message with the MM back-off timer, so that the handling of the timers T3411 and T3402 does not interfere with the handling of the MM back-off timer and the problem of indeterminate behavior of the mobile communication device 310 for handling the MM back-off operation is resolved.

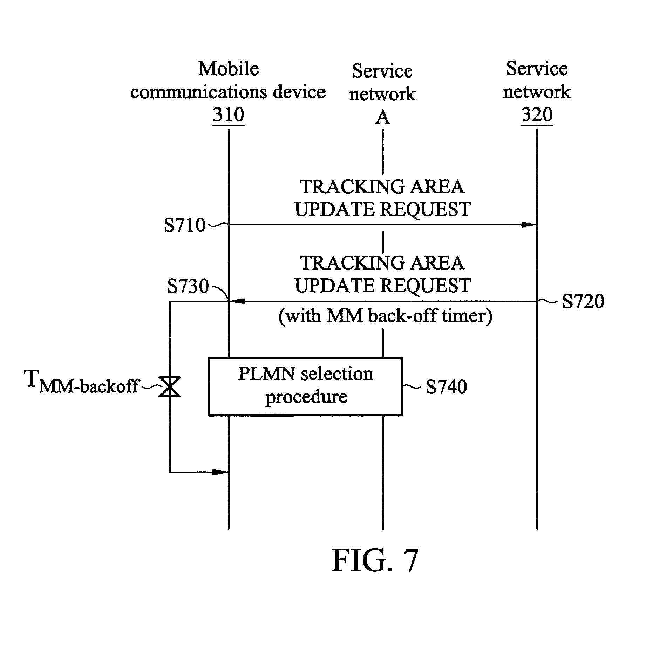

Fig. 7 is a message sequence chart illustrating an MM back-off operation during a TAU procedure according to another embodiment of the invention. To start the TAU procedure, the controller module 312 transmits a TRACKING AREA UPDATE REQUEST message to the service network 320 via the wireless module 311 (step S710). The TRACKING AREA UPDATE REQUEST message may comprise the information concerning the TA which the mobile communication device 310 is currently in. When receiving the TRACKING AREA UPDATE REQUEST message, the serving network node in core network 322 decides to reject the TAU request due to the fact that the NAS level congestion control is applied on the core network 322 when it is congested, and then replies to the mobile communication device 310 with a TRACKING AREA UPDATE REJECT message comprising an EMM cause value and an MM back-off timer (step S720). The controller module 312 further maintains a TAU attempt counter for accumulating the number of subsequently rejected TAU attempts, and the TAU attempt counter is incremented by 1 for each failed TAU attempt. In response to receiving the TRACKING AREA UPDATE REJECT message via the wireless module 311, the controller module 312 starts the MM back-off timer (step S730), and does not initiate any MM procedure until the MM back-off timer expires. Subsequently, the controller module 312 performs a PLMN selection procedure to search for another service network (denoted as Service Network A in Fig. 7) via the wireless module 311 (step S740), since the core network 322 is congested and the wireless services may not be obtained therefrom for a certain period of time. The PLMN selection procedure in step S740 is similar to that in step S640, except that the mobile communication device 310 performs the TAU procedure other than the ATTACH procedure in step S740. In another embodiment, before performing the step S740, the controller module 312 may wait for a random period of time, to avoid the problem of a massive number of UEs, which were rejected with MM back-off timers, flocking into a same service network.

Please note that in the embodiments of Fig.5 and Fig.7, the controller module 312 does not start the timer T3411 or T3402 in response to the TRACKING AREA UPDATE REJECT message with the MM back-off timer, so that the handling of the timers T3411 and T3402 does not interfere with the handling of the MM back-off timer and the problem of indeterminate behavior of the mobile communication device 310 for handling the MM back-off operation is resolved.

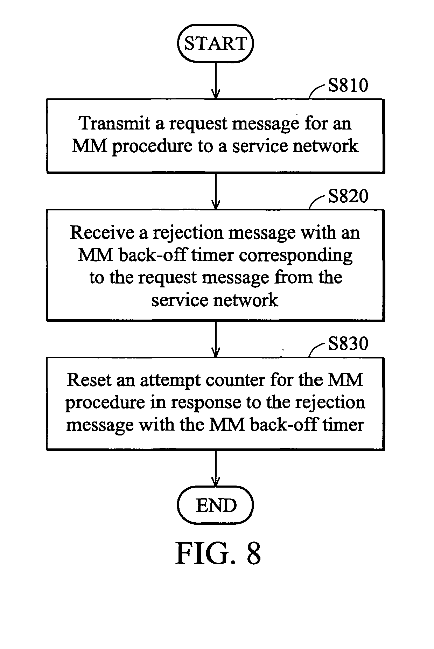

Fig. 8 is a flow chart illustrating a method for handling an MM back-off operation by a mobile communication device according to an embodiment of the invention. In this embodiment, the mobile communication device transmits a request message for an MM procedure to the service network (step S810), and then receives a rejection message with an MM back-off timer corresponding to the request message from the service network (step S820). In one embodiment, the MM procedure is an Attach procedure, and the request message and the rejection message are an ATTACH REQUEST message and an ATTACH REJECT message, respectively. In another embodiment, the MM procedure is a TAU procedure, and the request message and the rejection message are a TRACKING ARE UPDATE REQUEST message and a TRACKING ARE UPDATE REJECT message, respectively. Next, the mobile communication device resets an attempt counter for the MM procedure in response to the rejection message with the MM back-off timer (step S830). In one embodiment, the mobile communication device may further start the MM back-off timer in response to the rejection message with the MM back-off timer, and may not initiate any MM procedure with the service network until the MM back-off timer expires. Note that, the mobile communication device does not start a retry back-off timer for retransmissions of the request message in response to the rejection message with the MM back-off timer, so that the handling of the retry back-off timers (including the timers T3411 and T3402) does not interfere with the handling of the MM back-off timer and the problem of indeterminate behavior of the mobile communication device for handling the MM back-off operation is resolved.

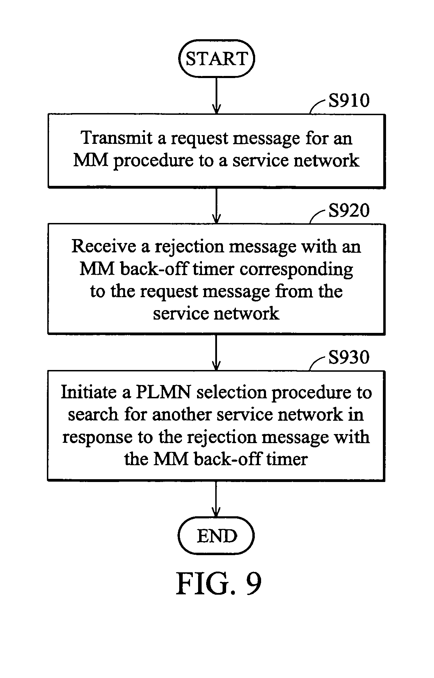

Fig. 9 is a flow chart illustrating a method for handling an MM back-off operation by a mobile communication device according to another embodiment of the invention. Similar to Fig. 8, the mobile communication device is wirelessly connected to a service network for obtaining wireless services, the mobile communication device transmits a request message for an MM procedure to the service network (step S910), and then receives a rejection message with an MM back-off timer corresponding to the request message from the service network (step S920). In one embodiment, the MM procedure is an Attach procedure, and the request message and the rejection message are an ATTACH REQUEST message and an ATTACH REJECT message, respectively. In another embodiment, the MM procedure is a Tracking Area Update procedure, and the request message and the rejection message are a TRACKING ARE UPDATE REQUEST message and a TRACKING ARE UPDATE REJECT message, respectively. Next, the mobile communication device initiates a PLMN selection procedure to search for another service network in response to the rejection message with the MM back-off timer (step S930). In one embodiment, before the step S930, the mobile communication device may wait for a random period of time, to avoid the problem of a massive number of UEs, which were rejected with MM back-off timers, flocking into a same service network. Note that, the mobile communication device may further start the MM back-off timer in response to the rejection message with the MM back-off timer, and may not initiate any MM procedure with the service network until the MM back-off timer expires.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A mobile communication device, comprising:
a wireless module performing wireless transceiving to and from a service
network; and
a controller module
transmitting a request message for a Mobility Management (MM) procedure to
the service network via the wireless module,
receiving a rejection message with an MM back-off timer corresponding to the
request message from the service network via the wireless module, and resetting an attempt counter for the MM procedure in response to the rejection
message with the MM back-off timer.

2. The mobile communication device of claim 1, wherein the MM procedure is an Attach procedure, and the request message and the rejection message are an ATTACH REQUEST message and an ATTACH REJECT message, respectively.

3. The mobile communication device of claim 1, wherein the MM procedure is a Tracking Area Update procedure, and the request message and the rejection message are a TRACKING ARE UPDATE REQUEST message and a TRACKING ARE UPDATE REJECT message, respectively.

4. The mobile communication device of claim 1, wherein the controller module does not start a retry back-off timer for retransmissions of the request message in response to the rejection message with the MM back-off timer.

5. A method for handling a Mobility Management (MM) back-off operation by a mobile communication device, comprising:
transmitting a request message for an MM procedure to a service network;
receiving a rejection message with an MM back-off timer corresponding to the
request message from the service network; and
resetting an attempt counter for the MM procedure in response to the rejection
message with the MM back-off timer.

6. The method of claim 5, wherein the MM procedure is an Attach procedure, and the request message and the rejection message are an ATTACH REQUEST message and an ATTACH REJECT message, respectively.

7. The method of claim 5, wherein the MM procedure is a Tracking Area Update procedure, and the request message and the rejection message are a TRACKING ARE UPDATE REQUEST message and a TRACKING ARE UPDATE REJECT message, respectively.

8. The method of claim 5, further comprising not starting a retry back-off timer for retransmissions of the request message in response to the rejection message with the MM back-off timer.

9. A method for handling a Mobility Management (MM) back-off operation by a mobile communication device, comprising:
transmitting a request message for an MM procedure to a service network;
receiving a rejection message with an MM back-off timer corresponding to the
request message from the service network; and
initiating a Public Land Mobile Network (PLMN) selection procedure to
search for another service network in response to the rejection message with the MM back-off timer.

10. The method of claim 9, wherein the MM procedure is an Attach procedure, and the request message and the rejection message are an ATTACH REQUEST message and an ATTACH REJECT message, respectively.

11. The method of claim 9, wherein the MM procedure is a Tracking Area Update procedure, and the request message and the rejection message are a TRACKING ARE UPDATE REQUEST message and a TRACKING ARE UPDATE REJECT message, respectively.

12. The method of claim 9, further comprising transmitting another request message for the MM procedure to the searched service network.

13. The method of claim 12, wherein the searched service network does not have a related MM back-off timer running in the mobile communication device.

14. The method of claim 12, further comprising waiting a random period of time before initiating the PLMN selection procedure or before transmitting another request message for the MM procedure to the searched service network.

15. The method of claim 9, further comprising transmitting another request message for the MM procedure to one of a plurality of searched service networks, wherein all of the searched service networks have related MM back-off timers running in the mobile communication device while the one of the searched service networks has a related MM back-off timer with the least amount of remaining time for expiry.
